# EUROPEAN PATENT SPECIFICATION

(11) **EP 3 382 144 B1**
(45) Date of publication and mention of the grant of the patent: **15.04.2020**
(21) Application number: 18163286.0
(22) Date of filing: 22.03.2018
(51) Int. Cl.: F01D 5/00

(54) **BUCKET VIBRATION DAMPING STRUCTURE AND BUCKET AND TURBOMACHINE HAVING THE SAME**
SCHAUFELSCHWINGUNGSDÄMPFUNGSSTRUKTUR UND SCHAUFEL UND TURBOMASCHINE DAMIT
STRUCTURE D'AMORTISSEMENT DE VIBRATIONS D'AILETTES, AILETTE ET TURBOMACHINE LES COMPORTANT

(30) Priority: 31.03.2017 KR 20170041742
(43) Date of publication of application: 03.10.2018
(73) Proprietor: Doosan Heavy Industries & Construction Co., Ltd., Seongsan-gu Changwon-si, Gyeongsangnam-do 51711 (KR)
(72) Inventor: JU, Jae Min, 51170 Gyeongsangnam-do (KR)
(74) Representative: Ter Meer Steinmeister & Partner

(56) References cited:
- EP-A1- 1 512 837
- EP-A1- 2 524 759
- JP-A- 2015 075 070
- US-A- 5 257 908
- US-A1- 2015 211 373
- US-A1- 2016 369 643

## Description

### BACKGROUND OF THE DISCLOSURE

### Field of the Disclosure

Exemplary embodiments of the present disclosure relate to a bucket vibration damping structure and a bucket and turbomachine having the same, and more particularly, to a structure capable of damping vibration while performing variable contact according to the rotational speed of a turbine.

### Description of the Related Art

In general, turbines are power generation apparatuses that convert thermal energy of fluid, such as gas or steam, into rotational force as mechanical energy, and each comprises a rotor having a plurality of buckets to axially rotate by fluid and a casing installed to surround the rotor and having a plurality of diaphragms.

Among these turbines, a gas turbine comprises a compressor section, a combustor, and a turbine section. In the gas turbine, outside air is sucked and compressed by the rotation of the compressor section and is then transferred to the combustor, and combustion is performed by mixing the compressed air with fuel in the combustor. The high-temperature and high-pressure gas generated in the combustor drives a generator by rotating a rotor of the turbine while passing through the turbine section.

In a steam turbine, a high-pressure turbine section, an intermediate-pressure turbine section, and a low-pressure turbine section are interconnected in series or in parallel to rotate the rotor. When the high-pressure turbine section, the intermediate-pressure turbine section, and the low-pressure turbine section are interconnected in series, these share one rotor.

In the steam turbine, each turbine has a diaphragm and a bucket with the rotor in a casing interposed therebetween. Steam rotates the rotor while passing through the diaphragm and the bucket, thereby enabling the generator to be driven.

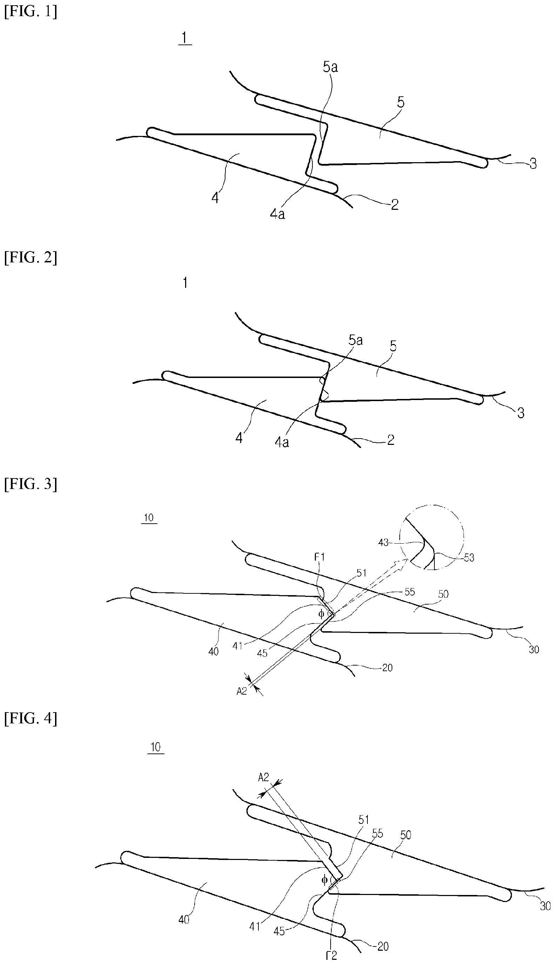

Figs. 1 and 2 illustrate connections between blades on a bucket disposed on the outer peripheral surface of a rotor disk.

The bucket generally comprises a coupling part that is coupled to the outer peripheral surface of the rotor disk in a dovetail manner. The coupling part has a platform formed at one end thereof, and the blades are disposed on the platform. Figs. 1 and 2 illustrate connections 4 and 5 between a plurality of blades 2 and 3.

When a turbine rotates at a low speed, the connections 4 and 5 are separated from each other with a certain gap therebetween, as illustrated in Fig. 1. When the turbine exceeds a constant speed while rotating at a high speed, the bucket is deformed so that the respective contact surfaces 4a and 5a of the connections 4 and 5 come into contact with each other, as illustrated in Fig. 2, thereby relieving vibration occurring at high speed.

US 5257908 A shows an arrangement of turbine blades that are held in groups formed by a series of spaced lugs constituting a lashing structure. Selected lugs have gaps which are "Z"-shaped, the gaps tending to close during untwisting of the blades when the blades are subjected to high centrifugal forces.

EP 2524759 A1 shows a pair of turbine buckets, each bucket including a Z-shaped front edge and a correspondingly-Z-shaped following edge. During operation of the turbine, following edge of the first bucket and front edge of the second bucket are in contact.

### SUMMARY OF THE DISCLOSURE

Since unexpected vibration by fluid often occurs in a turbomachine, it is necessary to relieve the vibration for power generation efficiency and damage prevention of the bucket. However, since the connections are separated from each other at a low speed in the related art, there is a problem in that vibration occurring at the low speed is not relieved.

The present disclosure has been made in view of the above-mentioned problem, and an object thereof is to provide a structure capable of damping vibration while performing variable contact according to the rotational speed of a turbine.

Other objects and advantages of the present disclosure can be understood by the following description, and become apparent with reference to the embodiments of the present disclosure. Also, it is obvious to those skilled in the art to which the present disclosure pertains that the objects and advantages of the present disclosure can be realized by the means as claimed and combinations thereof.

The present disclosure is directed to a bucket vibration damping structure and a bucket and turbomachine having the same. In accordance with one aspect of the present disclosure, the bucket vibration damping structure comprises a variable contact-type vibration damping means disposed on a plurality of bucket blades mounted on an outer peripheral surface of a rotor disk and performing variable contact according to rotational speed of a rotor for damping vibration, wherein the variable contact-type vibration damping means comprises a first damping member disposed on one of the blades, and a second damping member disposed at a position corresponding to the first damping member on the other blade.

The first damping member may comprise a first tangential portion disposed on one blade and protruding toward the other adjacent blade, and a second tangential portion forming a certain angle with the first tangential portion and disposed adjacent thereto on one blade.

Each of the first and second tangential portions may have a flat shape.

The first and second tangential portions may form an angle of 90° to 120° with each other.

The first and second tangential portions may have adjacent rounded portions.

The second damping member may comprise a first facing portion protruding toward the first tangential portion on the other adjacent blade, and a second facing portion forming a certain angle with the first facing portion and disposed adjacent thereto.

Each of the first and second facing portions may have a flat shape.

The first and second facing portions may form an angle of 90° to 120° with each other.

An amount of overlap between the first tangential portion and the first facing portion when they come into contact with each other may differ from an amount of overlap between the second tangential portion and the second facing portion when they come into contact with each other.

The amount of overlap between the second tangential portion and the second facing portion when they come into contact with each other may be greater than the amount of overlap between the first tangential portion and the first facing portion when they come into contact with each other.

An amount of gap between the first tangential portion and the first facing portion when they are not in contact with each other may differ from an amount of gap between the second tangential portion and the second facing portion when they are not in contact with each other.

The amount of gap between the second tangential portion and the second facing portion when they are not in contact with each other may be greater than the amount of gap between the first tangential portion and the first facing portion when they are not in contact with each other.

The first damping member may comprise a first curved portion disposed on one blade and rounded toward the other adjacent blade, and a second curved portion disposed adjacent to the first curved portion.

The first and second curved portions may have the same curvature.

The second damping member may comprise a first facing curved portion disposed on the other adjacent blade and rounded toward the first curved portion, and a second facing curved portion forming a certain angle with the first facing curved portion and disposed adjacent thereto.

The first and second facing curved portions may have the same curvature.

The curvature of the first and second facing curved portions may be greater than the curvature of the first and second curved portions.

In accordance with another aspect of the present disclosure, the bucket comprises a blade provided with the bucket vibration damping structure, a platform, one end of which is provided with the blade, and a coupling part provided at the other end of the platform and mounted on an outer peripheral surface of a rotor disk.

The bucket vibration damping structure may be disposed on a shroud cover portion or an intermediate portion of the blade.

In accordance with a further aspect of the present disclosure, the turbomachine comprises a casing, a compressor having the bucket and disposed in the casing to compress air introduced thereinto, a combustor connected to the compressor in the casing to combust the compressed air, a turbine connected to the combustor in the casing to produce power using the combusted air, and a diffuser connected to the turbine in the casing to discharge the air to the outside.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The above and other objects, features and other advantages of the present disclosure will be more clearly understood from the following detailed description taken in conjunction with the accompanying drawings, in which:
Fig. 1 is a view illustrating a conventional vibration damping structure in a non-contact state at a low speed;
Fig. 2 is a view illustrating a conventional vibration damping structure in a contact state at a high speed;
Fig. 3 is a view illustrating a vibration damping structure in a contact state at a low speed according to a first embodiment of the present disclosure;
Fig. 4 is a view illustrating a vibration damping structure in another contact state at a high speed according to the first embodiment of the present disclosure;
Fig. 5 is a view illustrating a vibration damping structure in a contact state at a low speed according to a second embodiment of the present disclosure;
Fig. 6 is a view illustrating a vibration damping structure in another contact state at a high speed according to the second embodiment of the present disclosure; and
Fig. 7 is a view illustrating that the vibration damping structure of the present disclosure is positioned on a blade.

### DESCRIPTION OF SPECIFIC EMBODIMENTS

Reference will now be made in detail to exemplary embodiments of the present disclosure, examples of which are illustrated in the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. Throughout the disclosure, like reference numerals refer to like parts throughout the various figures and embodiments of the present disclosure.

Hereinafter, a bucket vibration damping structure and a bucket and turbomachine having the same according to exemplary embodiments of the present disclosure will be described in detail with reference to the accompanying drawings.

Prior to description of exemplary embodiments of the present disclosure, the structure of a gas turbine, which is an example of a turbomachine pertaining to the present disclosure, will be described. However, the present disclosure may also be applied to other gas turbines and should not be construed as limited to the structure set forth hereinafter.

The gas turbine pertaining to the present disclosure comprises a compressor, a combustor, and a turbine as basic components.

First, the gas turbine has a casing corresponding to the body thereof. The compressor is disposed forward in the casing and the turbine is disposed rearward in the casing. The combustor is connected between the compressor and the turbine through respective passages in the casing.

Based on the flow direction of air, outside air is introduced into a compressor section disposed upstream of the gas turbine for an adiabatic compression process. The compressed air is introduced into a combustor section to be mixed with fuel for an isobaric combustion process. The combustion gas is introduced into a turbine section disposed downstream of the gas turbine for an adiabatic expansion process.

The combustion used to produce power in the turbine is discharged to outside through an exhaust diffuser disposed in the rear of the casing.

In this case, the compressor and the turbine are interconnected by one rotor shaft for rotation together.

Typically, the gas turbine provided in a power plant is continuously driven to produce power. Therefore, the integral connection of the compressor and the turbine by a single rotor shaft may be suitable for manufacturing costs and management.

In more detail, a plurality of disks is mounted on the outer peripheral surface of the rotor shaft disposed in the compressor section, and a plurality of buckets corresponding to rotary wings is radially arranged on the disks.

In an axial type coupling method, each of the buckets has a lower end processed in a dovetail form so that it is inserted into and coupled to a bucket mounting portion, which is formed on the outer peripheral surface of the associated disk, in the axial direction of the rotor shaft.

In another tangential type coupling method, the bucket is fitted into and coupled to the bucket mounting portion in the circumferential direction of the rotor disk.

A platform is formed at the upper end of the bucket, and a blade is disposed on the platform.

In this case, a plurality of disk diaphragms is fixedly arranged in rows on the inner peripheral surface of the casing, and a plurality of vanes or nozzles is radially arranged on the diaphragms. Each of the diaphragms has a hole formed at the center thereof such that the rotor shaft may be disposed therein.

The air introduced from outside is compressed by mutual rotation of the vanes or nozzles disposed on the diaphragms and the buckets.

The combustor section is disposed between the compressor section and the turbine section in the casing and is connected therebetween.

In the combustor section, a plurality of combustors is arranged in a shell form in the radial direction of the casing. Each of the combustors may comprise a burner that has a fuel injection nozzle and an ignition plug, an inner liner that defines a combustion chamber, a flow sleeve that guides the flow of combustion gas, and a transition piece that allows combustion gas to flow to the turbine section, etc.

The air, which is compressed in and introduced from the compressor section, is mixed with fuel injected from the combustor section for combustion and then flows to the turbine section.

In addition, a plurality of turbine wheels is disposed on the outer peripheral surface of the rotor shaft disposed in the turbine section, and a plurality of turbine blades corresponding to rotary wings is radially arranged on the turbine wheels.

In this case, a plurality of disk diaphragms is fixedly arranged in rows on the inner peripheral surface of the casing, and a plurality of vanes or nozzles is radially arranged on the diaphragms. Each of the diaphragms has a hole formed at the center thereof such that the rotor shaft may be disposed therein.

The combustion gas generated in the combustors is expanded by mutual rotation of the vanes or nozzles disposed on the diaphragms and the turbine blades and is used to produce power in the turbine section.

Then, the combustion gas having passed through the turbine section is discharged through the exhaust diffuser disposed in the rear of the casing.

Here, the gas turbine used in a combined generation system is configured such that the exhaust gas discharged from the exhaust diffuser is introduced into a steam turbine via heat exchangers for another power generation.

In this case, the pressure and velocity of the exhaust gas discharged from the exhaust diffuser may be important factors. Therefore, the exhaust gas must be introduced into the steam turbine at constant pressure and velocity for smooth operation of the system.

Hereinafter, in the present disclosure, the non-rotation component such as a casing, a diaphragm, or a combustor is referred to as a fixed unit or a stator, and the rotation component such as a rotor shaft, a compressor, or a turbine is referred to as a rotating unit or a rotor.

### [First Embodiment]

Fig. 3 is a view illustrating a vibration damping structure in a contact state at a low speed according to a first embodiment of the present disclosure. Fig. 4 is a view illustrating a vibration damping structure in another contact state at a high speed according to the first embodiment of the present disclosure.

Referring to Figs. 3 and 4, the vibration damping structure, which is designated by reference numeral 10, according to the first embodiment of the present disclosure comprises a variable contact-type vibration damping means 11 that is disposed on a plurality of bucket blades 20 and 30 mounted on the outer peripheral surface of a rotor disk. The vibration damping structure performs a variable contact according to the rotational speed of a rotor for damping vibration. The variable contact-type vibration damping means 11 may comprise a first damping member 40 that is disposed on one of the blades, and a second damping member 50 that is disposed at a position corresponding to the first damping member 40 on the other blade.

In the first embodiment of the present disclosure, the first damping member 40 comprises a first tangential portion 41 and a second tangential portion 45, and the second damping member 50 comprises a first facing portion 51 and a second facing portion 55.

The first tangential portion 41 may be disposed on one blade 20 and protrude toward the other adjacent blade 30, and the second tangential portion 45 may form a certain angle with the first tangential portion 41 and be disposed adjacent thereto on the blade 20.

In this case, the first and second tangential portions 41 and 45 may have a flat shape, which is to relieve vibration by forming contact surfaces with the first and second facing portions 51 and 55 as described below.

The first and second tangential portions 41 and 45 form a certain angle φ with each other. The certain angle φ may be determined corresponding to the deformation of a bucket, the shape of which is deformed by a rotary force according to the increase or decrease of the rotational speed of a turbine.

In the first embodiment of the present disclosure, the certain angle φ may be within a range of 90 to 120 degrees. In this case, even though the first and second tangential portions 41 and 45 come into the variable contact with the first and second facing portions 51 and 55 within a variation range of rotational speed (e.g., within a range of 1800 to 3600 rpm), the contact area of the overlap portion therebetween may be constantly maintained. Therefore, it may be possible to prevent the mutual separation between the first damping member 40 and the second damping member 50 even though the bucket is deformed.

In addition, the first and second tangential portions 41 and 45 have rounded portions 43 at the adjacent portions thereof. Thus, the first and second tangential portions 41 and 45 are smoothly movable even when they come into the variable contact with the first and second facing portions 51 and 55.

The first facing portion 51 may protrude toward the first tangential portion 41 on the other adjacent blade 30, and the second facing portion 55 may form a certain angle with the first facing portion 51 and be disposed adjacent thereto.

In this case, the first and second facing portions 51 and 55 may have a flat shape, which is to relieve vibration by forming contact surfaces with the first and second tangential portions 41 and 45.

The first and second facing portions 51 and 55 form a certain angle φ with each other. The certain angle φ may be determined corresponding to the deformation of the bucket, the shape of which is deformed by rotary force according to the increase or decrease of the rotational speed of the turbine. In addition, the certain angle φ may correspond to the angle formed by the first and second tangential portions 41 and 45.

In the first embodiment of the present disclosure, the certain angle φ may be within a range of 90 to 120 degrees. In this case, even though the first and second tangential portions 41 and 45 come into the variable contact with the first and second facing portions 51 and 55 within the variation range of rotational speed (e.g., within a range of 1800 to 3600 rpm), the contact area of the overlap portion therebetween may be constantly maintained. Therefore, it may be possible to prevent the mutual separation between the first damping member 40 and the second damping member 50 even though the bucket is deformed.

In addition, the first and second facing portions 51 and 55 have rounded portions 53 at the adjacent portions thereof. Thus, the first and second facing portions 51 and 55 are smoothly movable even when they come into variable contact with the first and second tangential portions 41 and 45.

Here, the first and second damping members 40 and 50 may be configured such that an amount of overlap F1 between the first tangential portion 41 and the first facing portion 51 when they come into contact with each other differs from an amount of overlap F2 between the second tangential portion 45 and the second facing portion 55 when they come into contact with each other.

This amount of overlap may be determined according to the degree of vibration caused by the rotational speed of the turbine. At a low speed, the vibration due to the impact with fluid is small since the rotational speed of the turbine is low. Thus, for relieving the vibration, the contact area between the damping members is relatively small.

At the high speed, the vibration due to the impact with fluid is large since the rotational speed of the turbine is high. Thus, for relieving the vibration, the contact area between the damping members is relatively large.

Accordingly, in the first embodiment of the present disclosure, the amount of overlap F2 between the second tangential portion 45 and the second facing portion 55 when they come into contact with each other may be greater than the amount of overlap F1 between the first tangential portion 41 and the first facing portion 51 when they come into contact with each other.

In addition, the first and second damping members 40 and 50 may be configured such that an amount of gap A2 between the first tangential portion 41 and the first facing portion 51 when they are not in contact with each other differs from an amount of gap A1 between the second tangential portion 45 and the second facing portion 55 when they are not in contact with each other.

This amount of gap may be determined according to the deformation of the bucket by the rotational speed of the turbine. The deformation of the bucket is further increased when the turbine rotates at the high speed. Therefore, in the first embodiment of the present disclosure, the amount of gap A1 between the second tangential portion 45 and the second facing portion 55 when they are not in contact with each other may be greater than the amount of gap A2 between the first tangential portion 41 and the first facing portion 51 when they are not in contact with each other.

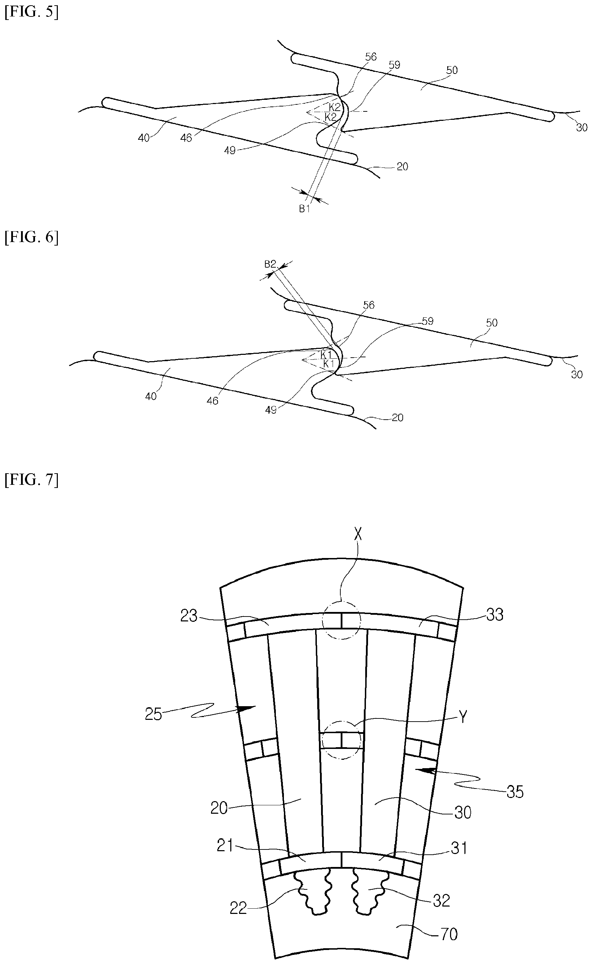

As illustrated in Fig. 7, the vibration damping structure 10 may be disposed on cover portions X of shrouds 23 and 33 disposed at the ends of blades 20 and 30 of buckets 25 and 35 or on intermediate portions Y of the blades 20 and 30. The blades 20 and 30 are disposed on platforms 21 and 31, and male dovetail coupling parts 22 and 32 may be formed at the other sides of the platforms 21 and 31 so as to be coupled to the outer peripheral mounting portion of a rotor disk 70.

The present disclosure may comprise these buckets. The present disclosure also pertains to a turbomachine comprising a casing, a compressor which has the buckets and is disposed in the casing to compress air introduced thereinto, a combustor which is connected to the compressor in the casing to combust the compressed air, a turbine which is connected to the combustor in the casing to produce power using the combusted air, and a diffuser which is connected to the turbine in the casing to discharge the air to outside.

### [Second Embodiment]

Fig. 5 is a view illustrating a vibration damping structure in a contact state at a low speed according to a second embodiment of the present disclosure. Fig. 6 is a view illustrating a vibration damping structure in another contact state at a high speed according to the second embodiment of the present disclosure.

Referring to Figs. 5 and 6, the vibration damping structure, which is designated by reference numeral 10, according to the second embodiment of the present disclosure comprises a variable contact-type vibration damping means 11 that is disposed on a plurality of bucket blades 20 and 30 mounted on the outer peripheral surface of a rotor disk and performs variable contact according to the rotational speed of a rotor for damping vibration. The variable contact-type vibration damping means 11 comprises a first damping member 40 that is disposed on one of the blades, and a second damping member 50 that is disposed at a position corresponding to the first damping member 40 on the other blade.

In the second embodiment of the present disclosure, the first damping member 40 comprises a first curved portion 46 and a second curved portion 49, and the second damping member 50 comprises a first facing curved portion 56 and a second facing curved portion 59.

The first curved portion 46 may be disposed on one blade 20 and be rounded toward the other adjacent blade 30, and the second curved portion 49 may be disposed adjacent to the first curved portion 46.

In this case, the first and second curved portions 46 and 49 may have a semi-circular shape, which is to relieve vibration by forming contact surfaces with the first and second facing curved portions 56 and 59 as described below.

The first and second curved portions 46 and 49 have the same curvature K1, which is to smoothly move when they form the contact surfaces with the first and second facing curved portions 56 and 59. That is, even though the first and second curved portions 46 and 49 come into a variable contact with the first and second facing curved portions 56 and 59 within a variation range of rotational speed (e.g., within a range of 1800 to 3600 rpm), the contact area of the overlap portion therebetween may be constantly maintained by virtue of the same curvature. Therefore, it may be possible to prevent the mutual separation between the first damping member 40 and the second damping member 50 even though the bucket is deformed.

The first facing curved portion 56 may be rounded toward the first curved portion 46 on the other adjacent blade 30, and the second facing curved portion 59 may be disposed adjacent to the first facing curved portion 56.

In this case, the first and second facing curved portions 56 and 59 may have the same curvature K2, which is to relieve vibration by forming contact surfaces with the first and second curved portions 46 and 49. In addition, the same curvature allows the first and second facing curved portions 56 and 59 to smoothly move.

Even though the first and second curved portions 46 and 49 come into the variable contact with the first and second facing curved portions 56 and 59 within a variation range of rotational speed (e.g., within a range of 1800 to 3600 rpm), the contact area of the overlap portion therebetween may be constantly maintained. Therefore, it may be possible to prevent the mutual separation between the first damping member 40 and the second damping member 50 even though the bucket is deformed.

Here, the first and second damping members 40 and 50 may be configured such that the curvature K2 of the first and second facing curved portions 56 and 59 is greater than the curvature K1 of the first and second curved portions 46 and 49.

This may be enable the first and second damping members to come into the variable contact with each other with respect to the increase or decrease of the rotational speed of the turbine by forming a gap which is a non-contact area therebetween. To this end, the curvature K2 is greater than the curvature K1.

In addition, the first and second damping members 40 and 50 may be configured such that an amount of gap B2 between the first curved portion 46 and the first facing curved portion 56 when they are not in contact with each other differs from an amount of gap B1 between the second curved portion 49 and the second facing curved portion 59 when they are not in contact with each other.

This amount of gap may be determined according to the deformation of the bucket by the rotational speed of the turbine. The deformation of the bucket is further increased when the turbine rotates at the high speed. Therefore, in the second embodiment of the present disclosure, the amount of gap B1 between the second curved portion 49 and the second facing curved portion 59 when they are not in contact with each other may be greater than the amount of gap B2 between the first curved portion 46 and the first facing curved portion 56 when they are not in contact with each other.

As illustrated in Fig. 7, the vibration damping structure 10 may be disposed on the cover portions X of the shrouds 23 and 33 disposed at the ends of the blades 20 and 30 of the buckets 25 and 35 or on the intermediate portions Y of the blades 20 and 30. The blades 20 and 30 are disposed on the platforms 21 and 31, and the male dovetail coupling parts 22 and 32 may be formed at the other sides of the platforms 21 and 31 so as to be coupled to the outer peripheral mounting portion of the rotor disk 70.

The present disclosure may comprise these buckets. The present disclosure also pertains to the turbomachine comprising the casing, the compressor which has the buckets and is disposed in the casing to compress air introduced thereinto, the combustor which is connected to the compressor in the casing to combust the compressed air, the turbine which is connected to the combustor in the casing to produce power using the combusted air, and the diffuser which is connected to the turbine in the casing to discharge the air to outside.

As is apparent from the above description, the present disclosure can damp vibration by connecting a plurality of blades while one surfaces thereof come into contact with each other at a low speed and can damp vibration by connecting the plurality of blades while the other surfaces thereof come into contact with each other when buckets are deformed by rotary force at a high speed.

In this case, since a different amount of overlap and a different amount of gap are applied to blades of adjacent respective buckets, it is possible to increase a vibration damping effect by friction between connections.

Ultimately, it is possible to improve the power generation efficiency of a turbine by effectively damping vibration caused when the turbine is operated.

While the bucket vibration damping structure and the bucket and turbomachine having the same according to the present disclosure have been described with respect to the specific embodiments, it will be apparent to those skilled in the art that various changes and modifications may be made without departing from the scope of the disclosure as defined in the following claims.

## Claims

1. A bucket vibration damping structure (10) comprising:
a variable contact-type vibration damping means (11) disposed on a plurality of bucket blades (20, 30) mounted on an outer peripheral surface of a rotor disk (70) and performing variable contact according to rotational speed of a rotor for damping vibration,
wherein the variable contact-type vibration damping means (11) comprises:
a first damping member (40) disposed on one blade (20) of the plurality of bucket blades (20, 30); and
a second damping member (50) disposed on another blade (30) of the plurality of bucket blades (20, 30) at a position corresponding to the first damping member (40) on the one blade (20);
**characterized in that** the first damping member (40) comprises a first tangential portion (41) and a second tangential portion (45) and the second damping member (50) comprises a first facing portion (51) and a second facing portion (55), wherein the first tangential portion (41) is configured to come in contact with first facing portion (51) at a low speed of rotation of the rotor and the second tangential portion (45) is configured to come in contact with the second facing portion (55) at a high speed of rotation of the rotor, within a variation range of rotational speed; and
wherein the first tangential portion (41) is disposed on the one blade (20) and is protruding toward the another blade (30), and
wherein the second tangential portion (45) forms a certain angle (φ) ranging from 90° to 120° with the first tangential portion (41) and is disposed adjacent thereto on the one blade (20).

2. The bucket vibration damping structure (10) according to claim 1, wherein the first and second tangential portions (41, 45) have adjacent rounded portions (43).

3. The bucket vibration damping structure (10) according to claim 1, wherein the first facing portion (51) protrudes toward the first tangential portion (41) on the another blade; and
the second facing portion (55) forms a certain angle (φ) with the first facing portion (51) and is disposed adjacent thereto.

4. The bucket vibration damping structure (10) according to claim 3, wherein each of the first and second facing portions (51, 55) has a flat shape and/or wherein each of the first and second tangential portions (41, 45) has a flat shape.

5. The bucket vibration damping structure (10) according to claim 3 or 4, wherein the first and second facing portions (51, 55) form the certain angle (φ) ranging from 90° to 120° with each other.

6. The bucket vibration damping structure (10) according to claim 3 to 5, wherein an amount of overlap (F1) between the first tangential portion (41) and the first facing portion (51) when they come into contact with each other differs from an amount of overlap (F2) between the second tangential portion (45) and the second facing portion (55) when they come into contact with each other.

7. The bucket vibration damping structure (10) according to claim 6, wherein the amount of overlap (F2) between the second tangential portion (45) and the second facing portion (55) when they come into contact with each other is greater than the amount of overlap (F1) between the first tangential portion (41) and the first facing portion (51) when they come into contact with each other.

8. The bucket vibration damping structure (10) according to claim 3 to 7, wherein an amount of gap (A2) between the first tangential portion (41) and the first facing portion (51) when they are not in contact with each other differs from an amount of gap (A1) between the second tangential portion (51) and the second facing portion (55) when they are not in contact with each other.

9. The bucket vibration damping structure (10) according to claim 8, wherein the amount of gap (A1) between the second tangential portion (45) and the second facing portion (55) when they are not in contact with each other is greater than the amount of gap (A2) between the first tangential portion (41) and the first facing portion (55) when they are not in contact with each other.

10. A bucket vibration damping structure (10) comprising:
a variable contact-type vibration damping means (11) disposed on a plurality of bucket blades (20, 30) mounted on an outer peripheral surface of a rotor disk (70) and performing variable contact according to rotational speed of a rotor for damping vibration,
wherein the variable contact-type vibration damping means (11) comprises:
a first damping member (40) disposed on one blade (20) of the plurality of bucket blades (20, 30); and
a second damping member (50) disposed on another blade (30) of the plurality of bucket blades (20, 30) at a position corresponding to the first damping member (40) on the one blade (20);
**characterized in that** the first damping member (40) comprises a first curved portion (46) and a second curved portion (49) and the second damping member (50) comprises a first facing curved portion (56) and a second facing curved portion (59), wherein the first curved portion (46) is configured to come in contact with first facing curved portion (56) at a low speed of rotation of the rotor and the second curved portion (49) is configured to come in contact with the second facing curved portion (59) at a high speed of rotation of the rotor, within a variation range of rotational speed; and
wherein the first curved portion (46) is disposed on the one blade (20) and is rounded toward the another blade (30); and
the second curved portion (49) is disposed adjacent to the first curved portion (46).

11. The bucket vibration damping structure (10) according to claim 10, wherein the first facing curved portion (56) is disposed on the another blade (30) and rounded toward the first curved portion (46); and
the second facing curved portion (59) forms a certain angle with the first facing curved portion (56) and is disposed adjacent thereto.

12. The bucket vibration damping structure (10) according to claim 11, wherein the curvature (K2) of the first and second facing curved portions (56, 59) is greater than the curvature (K1) of the first and second curved portions (46, 49).

13. A turbomachine comprising:
- a casing,
- a compressor having the buckets and disposed in the casing to compress air introduced thereinto,
- a combustor connected to the compressor in the casing to combust the compressed air,
- a turbine connected to the combustor in the casing to produce power using the combusted air, and a diffuser connected to the turbine in the casing to discharge the air to the outside;
**characterized in that**
the turbomachine comprises a bucket vibration damping structure (10) according to either any of the claims 1 to 9 or claim 10.

## Patentansprüche

1. Struktur (10) zum Dämpfen von Schaufelschwingungen, umfassend:
ein Schwingungsdämpfungsmittel (11) von der Art mit variablem Kontakt, das auf einer Vielzahl von Schaufelblättern (20, 30), die auf einer äußeren Peripheriefläche einer Rotorscheibe (70) montiert sind, angeordnet ist und gemäß einer Drehzahl eines Rotors einen variablen Kontakt ausführt, um die Schwingungen zu dämpfen,
wobei das Schwingungsdämpfungsmittel (11) von der Art mit variablem Kontakt Folgendes umfasst:
ein erstes Dämpfungselement (40), das auf einer Schaufel (20) der Vielzahl von Schaufelblättern (20, 30) angeordnet ist; und
ein zweites Dämpfungselement (50), das auf einer anderen Schaufel (30) der Vielzahl von Schaufelblättern (20, 30) in einer Position, die dem ersten Dämpfungselement (40) auf der einen Schaufel (20) entspricht, angeordnet ist;
**dadurch gekennzeichnet, dass** das erste Dämpfungselement (40) einen ersten tangentialen Abschnitt (41) und einen zweiten tangentialen Abschnitt (45) umfasst und das zweite Dämpfungselement (50) einen ersten gegenüberstehenden Abschnitt (51) und einen zweiten gegenüberstehenden Abschnitt (55) umfasst, wobei der erste tangentiale Abschnitt (41) konfiguriert ist, um bei einer geringen Drehzahl des Rotors mit dem ersten gegenüberstehenden Abschnitt (51) in Kontakt zu kommen, und der zweite tangentiale Abschnitt (45) konfiguriert ist, um bei einer hohen Drehzahl des Rotors mit dem zweiten gegenüberstehenden Abschnitt (55) in Kontakt zu kommen, innerhalb eines Variationsbereichs der Drehzahl; und
wobei der erste tangentiale Abschnitt (41) auf der einen Schaufel (20) angeordnet ist und in Richtung auf die andere Schaufel (30) vorsteht, und
wobei der zweite tangentiale Abschnitt (45) einen gewissen Winkel (Φ), der von 90° bis 120° reicht, mit dem ersten tangentialen Abschnitt (41) bildet und daran angrenzend auf der einen Schaufel (20) angeordnet ist.

2. Struktur (10) zum Dämpfen von Schaufelschwingungen nach Anspruch 1, wobei die ersten und zweiten tangentialen Abschnitte (41, 45) angrenzende abgerundete Abschnitte (43) aufweisen.

3. Struktur (10) zum Dämpfen von Schaufelschwingungen nach Anspruch 1, wobei der erste gegenüberstehende Abschnitt (51) in Richtung auf den ersten tangentialen Abschnitt (41) auf der anderen Schaufel vorsteht; und
der zweite gegenüberstehende Abschnitt (55) einen gewissen Winkel (Φ) mit dem ersten gegenüberstehenden Abschnitt (51) bildet und daran angrenzend angeordnet ist.

4. Struktur (10) zum Dämpfen von Schaufelschwingungen nach Anspruch 3, wobei jeder von den ersten und zweiten gegenüberstehenden Abschnitten (51, 55) eine flache Form aufweist, und/oder wobei jeder von den ersten und zweiten tangentialen Abschnitten (41, 45) eine flache Form aufweist.

5. Struktur (10) zum Dämpfen von Schaufelschwingungen nach Anspruch 3 oder 4, wobei die ersten und zweiten gegenüberstehenden Abschnitte (51, 55) den gewissen Winkel (Φ), der von 90° bis 120° reicht, miteinander bilden.

6. Struktur (10) zum Dämpfen von Schaufel schwingungen nach Anspruch 3 bis 5, wobei ein Überlappungsbetrag (F1) zwischen dem ersten tangentialen Abschnitt (41) und dem ersten gegenüberstehenden Abschnitt (51), wenn sie miteinander in Kontakt kommen, anders ist als ein Überlappungsbetrag (F2) zwischen dem zweiten tangentialen Abschnitt (45) und dem zweiten gegenüberstehenden Abschnitt (55), wenn sie miteinander in Kontakt kommen.

7. Struktur (10) zum Dämpfen von Schaufelschwingungen nach Anspruch 6, wobei der Überlappungsbetrag (F2) zwischen dem zweiten tangentialen Abschnitt (45) und dem zweiten gegenüberstehenden Abschnitt (55), wenn sie miteinander in Kontakt kommen, größer ist als der Überlappungsbetrag (F1) zwischen dem ersten tangentialen Abschnitt (41) und dem ersten gegenüberstehenden Abschnitt (51), wenn sie miteinander in Kontakt kommen.

8. Struktur (10) zum Dämpfen von Schaufel schwingungen nach Anspruch 3 bis 7, wobei ein Zwischenraumbetrag (A2) zwischen dem ersten tangentialen Abschnitt (41) und dem ersten gegenüberstehenden Abschnitt (51), wenn sie nicht miteinander in Kontakt stehen, anders ist als ein Zwischenraumbetrag (A1) zwischen dem zweiten tangentialen Abschnitt (51) und dem zweiten gegenüberstehenden Abschnitt (55), wenn sie nicht miteinander in Kontakt stehen.

9. Struktur (10) zum Dämpfen von Schaufelschwingungen nach Anspruch 8, wobei der Zwischenraumbetrag (A1) zwischen dem zweiten tangentialen Abschnitt (45) und dem zweiten gegenüberstehenden Abschnitt (55), wenn sie nicht miteinander in Kontakt stehen, größer ist als der Zwischenraumbetrag (A2) zwischen dem ersten tangentialen Abschnitt (41) und dem ersten gegenüberstehenden Abschnitt (55), wenn sie nicht in Kontakt miteinander stehen.

10. Struktur (10) zum Dämpfen von Schaufelschwingungen, umfassend:
ein Schwingungsdämpfungsmittel (11) von der Art mit variablem Kontakt, das auf einer Vielzahl von Schaufelblättern (20, 30), die auf einer äußeren Peripheriefläche einer Rotorscheibe (70) montiert sind, angeordnet ist und gemäß einer Drehzahl eines Rotors einen variablen Kontakt ausführt, um die Schwingungen zu dämpfen,
wobei das Schwingungsdämpfungsmittel (11) von der Art mit variablem Kontakt Folgendes umfasst:
ein erstes Dämpfungselement (40), das auf einer Schaufel (20) der Vielzahl von Schaufelblättern (20, 30) angeordnet ist; und
ein zweites Dämpfungselement (50), das auf einer anderen Schaufel (30) der Vielzahl von Schaufelblättern (20, 30) in einer Position, die dem ersten Dämpfungselement (40) auf der einen Schaufel (20) entspricht, angeordnet ist;
**dadurch gekennzeichnet, dass** das erste Dämpfungselement (40) einen ersten gekrümmten Abschnitt (46) und einen zweiten gekrümmten Abschnitt (49) umfasst und das zweite Dämpfungselement (50) einen ersten gegenüberstehenden gekrümmten Abschnitt (56) und einen zweiten gegenüberstehenden gekrümmten Abschnitt (59) umfasst, wobei der erste gekrümmte Abschnitt (46) konfiguriert ist, um bei einer geringen Drehzahl des Rotors mit dem ersten gegenüberstehenden gekrümmten Abschnitt (5) in Kontakt zu kommen, und der zweite gekrümmte Abschnitt (49) konfiguriert ist, um bei einer hohen Drehzahl des Rotors mit dem zweiten gegenüberstehenden gekrümmten Abschnitt (59) in Kontakt zu kommen, innerhalb eines Variationsbereichs der Drehzahl; und
wobei der erste gekrümmte Abschnitt (46) auf der einen Schaufel (20) angeordnet ist und in Richtung auf die andere Schaufel (30) abgerundet ist; und
wobei der zweite gekrümmte Abschnitt (49) an den ersten gekrümmten Abschnitt (46) angrenzend angeordnet ist.

11. Struktur (10) zum Dämpfen von Schaufelschwingungen nach Anspruch 10, wobei der erste gegenüberstehende gekrümmte Abschnitt (56) auf der anderen Schaufel (30) angeordnet ist und in Richtung auf den ersten gekrümmten Abschnitt (46) abgerundet ist; und
der zweite gegenüberstehende gekrümmte Abschnitt (59) einen gewissen Winkel mit dem ersten gegenüberstehenden gekrümmten Abschnitt (56) bildet und daran angrenzend angeordnet ist.

12. Struktur (10) zum Dämpfen von Schaufelschwingungen nach Anspruch 11, wobei die Krümmung (K2) der ersten und zweiten gegenüberstehenden gekrümmten Abschnitte (56, 59) größer ist als die Krümmung (K1) der ersten und zweiten gekrümmten Abschnitte (46, 49).

13. Turbomaschine, umfassend:
- ein Gehäuse,
- einen Kompressor, der die Schaufeln aufweist und in dem Gehäuse angeordnet ist, um die Luft zu komprimieren, die darin eingeführt wird,
- eine Brennkammer, die mit dem Kompressor in dem Gehäuse verbunden ist, um die komprimierte Luft zu verbrennen,
- eine Turbine, die mit der Brennkammer in dem Gehäuse verbunden ist, um unter Verwendung der Verbrennungsluft Energie zu erzeugen, und
- einen Diffusor, der mit der Turbine in dem Gehäuse verbunden ist, um die Luft nach außen abzulassen;
**dadurch gekennzeichnet, dass** die Turbomaschine eine Struktur (10) zum Dämpfen von Schaufelschwingungen nach einem der Ansprüche 1 bis 9 oder nach Anspruch 10 umfasst.

## Revendications

1. Structure d'amortissement de vibrations d'aubes (10) comportant :
des moyens d'amortissement de vibrations de type à contact variable (11) disposés sur une pluralité de lames d'aubes (20, 30) montées sur une surface périphérique extérieure d'un disque de rotor (70) et assurant un contact variable en fonction d'une vitesse de rotation d'un rotor pour amortir les vibrations,
dans laquelle les moyens d'amortissement de vibrations de type à contact variable (11) comportent :
un premier élément d'amortissement (40) disposé sur une lame (20) de la pluralité de lames d'aubes (20, 30) ; et
un second élément d'amortissement (50) disposé sur une autre lame (30) de la pluralité de lames d'aubes (20, 30) à une position correspondant au premier élément d'amortissement (40) sur la lame (20) ;
**caractérisée en ce que** le premier élément d'amortissement (40) comporte une première partie tangentielle (41) et une seconde partie tangentielle (45) et le second élément d'amortissement (50) comporte une première partie faciale (51) et une seconde partie faciale (55), dans laquelle la première partie tangentielle (41) est configurée pour venir en contact avec la première partie faciale (51) à une petite vitesse de rotation du rotor et la seconde partie tangentielle (45) est configurée pour venir en contact avec la seconde partie faciale (55) à une grande vitesse de rotation du rotor, dans les limites d'une plage de variation de la vitesse de rotation ; et
dans laquelle la première partie tangentielle (41) est disposée sur la lame (20) et fait saillie vers l'autre lame (30), et
dans laquelle la seconde partie tangentielle (45) forme un certain angle (φ) variant de 90° à 120° avec la première partie tangentielle (41) et est disposée au voisinage de celle-ci sur la lame (20).

2. Structure d'amortissement de vibrations d'aubes (10) selon la revendication 1, dans laquelle les première et seconde parties tangentielles (41, 45) ont des parties arrondies (43) adjacentes.

3. Structure d'amortissement de vibrations d'aubes (10) selon la revendication 1, dans laquelle la première partie faciale (51) fait saillie vers la première partie tangentielle (41) sur l'autre lame ; et
la seconde partie faciale (55) forme un certain angle (φ) avec la première partie faciale (51) et est disposée au voisinage de celle-ci.

4. Structure d'amortissement de vibrations d'aubes (10) selon la revendication 3, dans laquelle chacune des première et seconde parties faciales (51, 55) a une forme plate et/ou dans laquelle chacune des première et seconde parties tangentielles (41, 45) a une forme plate.

5. Structure d'amortissement de vibrations d'aubes (10) selon la revendication 3 ou 4, dans laquelle les première et seconde parties faciales (51, 55) forment l'angle spécifique (φ) variant de 90° à 120° l'une par rapport à l'autre.

6. Structure d'amortissement de vibrations d'aubes (10) selon les revendications 3 à 5, dans laquelle une quantité de chevauchement (F1) entre la première partie tangentielle (41) et la première partie faciale (51) lorsqu'elles viennent en contact l'une avec l'autre diffère d'une quantité de chevauchement (F2) entre la seconde partie tangentielle (45) et la seconde partie faciale (55) lorsqu'elles viennent en contact l'une avec l'autre.

7. Structure d'amortissement de vibrations d'aubes (10) selon la revendication 6, dans laquelle la quantité de chevauchement (F2) entre la seconde partie tangentielle (45) et la seconde partie faciale (55) lorsqu'elles viennent en contact l'une avec l'autre est plus grande que la quantité de chevauchement (F1) entre la première partie tangentielle (41) et la première partie faciale (51) lorsqu'elles viennent en contact l'une avec l'autre.

8. Structure d'amortissement de vibrations d'aubes (10) selon les revendications 3 à 7, dans laquelle une quantité d'espace (A2) entre la première partie tangentielle (41) et la première partie faciale (51) lorsqu'elles ne sont pas en contact l'une avec l'autre diffère d'une quantité d'espace (A1) entre la seconde partie tangentielle (51) et la seconde partie faciale (55) lorsqu'elles ne sont pas en contact l'une avec l'autre.

9. Structure d'amortissement de vibrations d'aubes (10) selon la revendication 8, dans laquelle la quantité d'espace (A1) entre la seconde partie tangentielle (45) et la seconde partie faciale (55) lorsqu'elles ne sont pas en contact l'une avec l'autre est plus grande que la quantité d'espace (A2) entre la première partie tangentielle (41) et la première partie faciale (55) lorsqu'elles ne sont pas en contact l'une avec l'autre.

10. Structure d'amortissement de vibrations d'aubes (10) comportant :
des moyens d'amortissement de vibrations de type à contact variable (11) disposés sur une pluralité de lames d'aubes (20, 30) montées sur une surface périphérique extérieure d'un disque de rotor (70) et assurant un contact variable en fonction d'une vitesse de rotation d'un rotor pour amortir les vibrations,
dans laquelle les moyens d'amortissement de vibrations de type à contact variable (11) comportent :
un premier élément d'amortissement (40) disposé sur une lame (20) de la pluralité de lames d'aubes (20, 30) ; et
un second élément d'amortissement (50) disposé sur une autre lame (30) de la pluralité de lames d'aubes (20, 30) à une position correspondant au premier élément d'amortissement (40) sur la lame (20) ;
**caractérisée en ce que** le premier élément d'amortissement (40) comporte une première partie courbe (46) et une seconde partie courbe (49) et le second élément d'amortissement (50) comporte une première partie courbe faciale (56) et une seconde partie courbe faciale (59), dans laquelle la première partie courbe (46) est configurée pour venir en contact avec la première partie courbe faciale (56) à une petite vitesse de rotation du rotor et la seconde partie courbe (49) est configurée pour venir en contact avec la seconde partie courbe faciale (59) à une grande vitesse de rotation du rotor, dans les limites d'une plage de variation de la vitesse de rotation ; et
dans laquelle la première partie courbe (46) est disposée sur la lame (20) et est arrondie vers l'autre lame (30) ; et
la seconde partie courbe (49) est disposée au voisinage de la première partie courbe (46).

11. Structure d'amortissement de vibrations d'aubes (10) selon la revendication 10, dans laquelle la première partie courbe faciale (56) est disposée sur l'autre lame (30) et arrondie vers la première partie courbe (46) ; et
la seconde partie courbe faciale (59) forme un certain angle avec la première partie courbe faciale (56) et est disposée au voisinage de celle-ci.

12. Structure d'amortissement de vibrations d'aubes (10) selon la revendication 11, dans laquelle la courbure (K2) des première et seconde parties courbes faciales (56, 59) est plus grande que la courbure (K1) des première et seconde parties courbes (46, 49).

13. Turbomachine comportant :
- un carter,
- un compresseur ayant les aubes et disposé dans le carter pour comprimer de l'air introduit dans celui-ci,
- une chambre de combustion reliée au compresseur dans le carter pour brûler l'air comprimé,
- une turbine reliée à la chambre de combustion dans le carter pour produire de la puissance en utilisant l'air brûlé, et un diffuseur relié à la turbine dans le carter pour évacuer l'air vers l'extérieur ;
**caractérisée en ce que**
la turbomachine comporte une structure d'amortissement de vibrations d'aubes (10) soit selon l'une quelconque des revendications 1 à 9, soit selon la revendication 10.
